# DEMANDE DE BREVET EUROPEEN

(11) **EP 0 883 058 A1**
(43) Date de publication de la demande: **09.12.1998**
(21) Numéro de dépôt: 98401315.1
(22) Date de dépôt: 02.06.1998
(51) Int. Cl.: G06F 9/44

(54) **Procédé de traduction d'un code source GDMO en code source d'un langage de programmation, notamment orienté objet**

(30) Priorité: 05.06.1997 FR 9706968
(71) Demandeur: Alcatel Alsthom Compagnie Generale d'Electricité, 75088 Paris (FR)
(72) Inventeur: Potonniee, Olivier, 75006 Paris (FR)
(74) Mandataire: Lamoureux, Bernard

(57) **Abrégé**

Procédé de traduction d'un code source en langage GDMO vers un code source d'un langage de programmation, ledit code source en langage GDMO contenant des objets gérés et lesdits objets gérés contenant des paquets, caractérisé en ce que chaque paquet et chaque objet géré dudit code source en langage GDMO est traduit en une structure de données dans ledit langage de programmation, et en ce que chaque structure de données correspondant à un objet géré dispose d'un moyen d'accès aux structures de données correspondant aux paquets que ledit objet géré contient.

## Description

La présente invention concerne un procédé de traduction d'un code source en langage GDMO, vers un code source en un langage de programmation, notamment orienté objet tel que, par exemple, le langage C++.

De façon classique, la gestion des réseaux de télécommunication, du fait des dimensions importantes de ces derniers, se fait par l'intermédiaire de plates-formes complexes et réparties appelés réseaux de gestion des télécommunications (RGT, ou TMN pou*r Telecommunication Management Networks* en anglais). La conception des applications (ou programme, ou encore logiciel) s'exécutant sur ces plates-formes est, elle aussi, complexe, et nécessite, de ce fait, des méthodologies rigoureuses de développement.

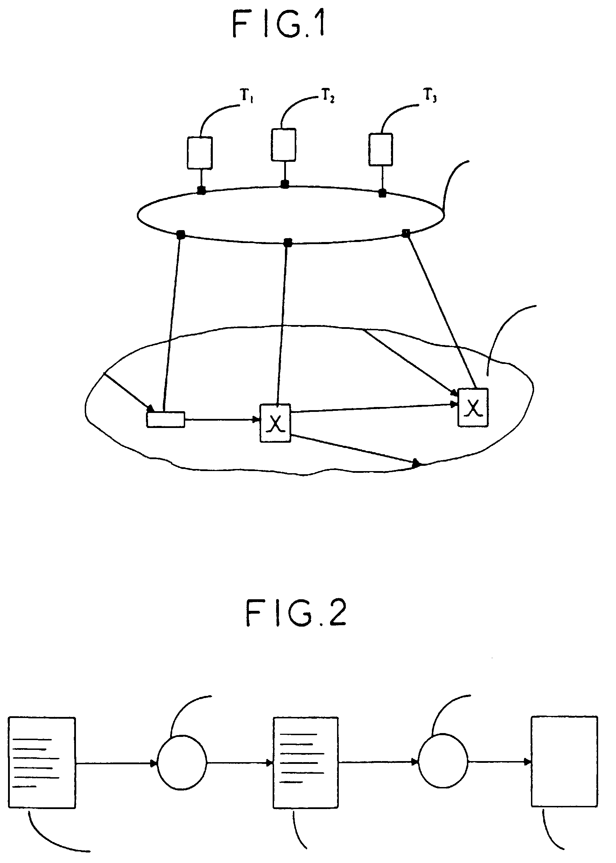

La figure 1 illustre, de façon très schématique, l'architecture générale interconnectant un réseau de télécommunication et un réseau de gestion des télécommunications. Le réseau de gestion des télécommunications (RGT) est relié aux équipements du réseau de télécommunication (RT). Par ailleurs, sur ce RGT, est connecté un ensemble de terminaux T₁, T₂, T₃... permettant à des opérateurs de consulter l'état du réseau de télécommunication (RT), de le paramétrer, etc.

De façon très générale, l'élaboration d'une application de gestion de réseaux de télécommunication se divise en deux grandes étapes : une étape de spécification et une étape de développement.

Un des objectifs de la première étape est de ne prendre en compte que les données et contraintes du réseau de télécommunication, sans se préoccuper des contraintes issues du réseau de gestion des télécommunications (RGT). Ce n'est que lors de la seconde étape, que les contraintes du RGT sont prises en compte.

Le CCITT (pour Comité Consultatif International de Télégraphie et de Téléphonie) de l'ITU *(International Telecommunication Union)* a proposé une recommandation référencée X.722 et intitulée *Information Technology* - *Open System Interconnection (OSI) - Structure of Management Information: Guidelines for the Definition of Managed Objects (GDMO)*. Cette recommandation détaille un langage de spécification d'applications de gestion de réseau de télécommunication, appelé GDMO. Les avantages de ce langage sont les suivants :
- il est très riche et permet ainsi à l'utilisateur de décrire un grand nombre de concepts,
- il est très générique et indépendant du réseau de gestion des télécommunications (RGT), permettant ainsi une grande portabilité des applications spécifiées.

La figure 2, illustre schématiquement le processus d'élaboration d'une application de gestion d'un réseau de télécommunication.

Un premier code source, en langage GDMO, est écrit lors de la phase de spécification, puis traduit, à l'issue de celle-ci, dans un langage cible, par l'intermédiaire d'un moyen informatique spécifique appelé traducteur. De façon classique, ce langage cible est un langage orienté objet (L.O.O.), par exemple le langage C++. Ce langage, en cours de normalisation par l'ANSI *(American National Standards Institute)* et par l'OSI *(Open System Interconnection)*, est exhaustivement décrit dans l'ouvrage de référence de Bjarne Stroustrup, *Le langage C*++, aux éditions Addisson Wesley.

A ce stade, le code source ne contient que ce qui a été indiqué pendant la phase de spécification, et doit donc être enrichi durant la phase de développement, notamment en prenant en compte les données propres au RGT. Enfin, il est compilé, par un compilateur classique en soi, afin de donner un code objet, exécutable sur le RGT.

Dans la suite nous ne rentrerons pas dans les détails du langage GDMO qui sont précisément décrits dans la recommandation X.722 du CCITT, citée précédemment. Toutefois, afin de faciliter la compréhension de l'invention, il est utile de préciser ici la structure générale d'une spécification en langage GDMO, ainsi que certains concepts importants qu'il met en oeuvre.

Ces différents concepts sont définis soit dans la recommandation X.722, précédemment citée, qui spécifie le langage GDMO proprement dit, soit dans les autres recommandations de la série X.700 du CCITT dont, notamment, les recommandations X.701, *System Management Overview*, et X.720, *Management Information Model*.

La notion d'objet géré (MO pour *Managed Object* en anglais) est, quant à elle, définie dans la recommandation X.700 intitulée *Management Framework*. Un objet géré correspond, par exemple, à un élément du réseau de télécommunication (un équipement, une connexion...), et encapsule toutes les données le concernant ainsi que les méthodes permettant de les manipuler.

Ces données peuvent être de plusieurs types : actions, attributs (*attributes* en anglais), notifications....

Le langage de spécification GDMO possède une autre structure de données importante appelée paquet (*ou package* en anglais) qui peut être vue comme un niveau intermédiaire entre les objets gérés et les données. Ce concept est défini dans la recommandation X.720 du CCITT, intitulée *Management Information Model*.

D'une façon sommaire, on peut dire qu'un paquet encapsule un ensemble de données, et qu'un objet géré peut contenir plusieurs paquets gérés. Il est à noter qu'un même paquet peut être contenu par plusieurs objets gérés différents. Il est de plus possible de stipuler qu'un paquet n'est contenu que de façon conditionnelle dans un objet géré. Cette notion de paquet conditionnel est précisément décrite dans le paragraphe 8.3.3.3 de la recommandation X.720 susmentionnée.

L'objet de la présente invention est une amélioration du moyen informatique qui permet de traduire le code source en GDMO, en un code source dans un langage de programmation, préférentiellement orienté objet. La présente invention s'applique aux différents langages orientés objets disponibles (C++, Java, Smalltalk, etc.), ainsi qu'aux langages procéduraux structurés (C, Ada...).

Dans les traducteurs de l'état de la technique traduisant un code source en GDMO vers un code source en langage orienté objet, chaque classe d'objets du code source traduit en langage orienté objet correspond à un objet géré du code source en GDMO, et réciproquement.

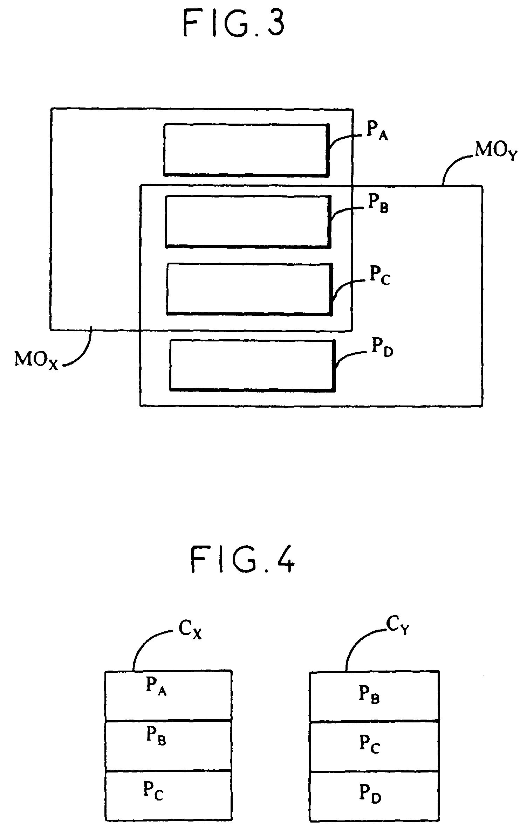

Cette façon de faire engendre un problème dans la mesure où lorsque deux objets gérés partagent un même paquet, le contenu de ce paquet se trouve dupliqué dans les deux classes d'objets. On peut mettre en évidence ce problème au travers de l'exemple illustré par les figures 3 et 4.

Sur la figure 3 qui représente un exemple schématique de spécification GDMO, un premier objet géré (MO_{X} ) comporte 3 paquets (P_{A}, P_{B}, et P_{C}) et un second objet géré (MO_{Y}) comporte 3 paquets (P_{B}, P_{C} et P_{D}). La figure 4 illustre, quant à elle, le résultat schématique que donne un traducteur selon l'état de la technique sur l'exemple de la figure 3. Deux classes (C_{X,} C_{Y}) sont créées, correspondant aux objets gérés de la spécification GDMO (respectivement MO_{X}, MO_{Y}). On voit sur cet exemple que le contenu des paquets P_{B} et P_{C} a été dupliqué dans chacune des deux classes du langage orienté objet (C_{X} et C_{Y}).

De cette duplication du contenu des paquets spécifiés au niveau du code source en GDMO, résulte la duplication du travail d'enrichissement du code source en langage de programmation à la charge du développeur.

Cette duplication du travail, en plus d'une perte de temps et donc d'une augmentation directe des coûts de développement, engendre une plus grande lourdeur de ce code source et, de là, une plus grande difficulté pour la maintenance du logiciel ainsi développé.

A cet effet, l'objet de la présente invention est un procédé de traduction se caractérisant en ce que
- chaque paquet et chaque objet géré du code source en langage GDMO est traduit en une structure de données dans le code source en langage de programmation, et en ce que
- chaque structure de données correspondant à un objet géré dispose d'un moyen d'accès aux structures de données correspondant aux paquets que ledit objet géré contient.

L'invention, telle que revendiquée, apparaîtra de façon plus claire dans la description suivante, faite en relation avec les dessins annexés.

La figure 1, déjà commentée, représente l'architecture globale dans laquelle l'invention est susceptible de s'appliquer.

La figure 2, déjà commentée, illustre le procédé général d'élaboration d'une application de gestion d'un réseau de télécommunication.

La figure 3, déjà commentée, montre un exemple particulier de spécification d'une application de gestion d'un réseau de télécommunication.

La figure 4, également déjà commentée, montre de façon très schématique le résultat d'un traducteur tel que ceux de l'état de la technique sur l'exemple de la figure précédente.

La figure 5, montre, de façon très schématique, le résultat d'un traducteur selon une mise en oeuvre de la présente invention, appliqué à l'exemple illustré par la figure 3.

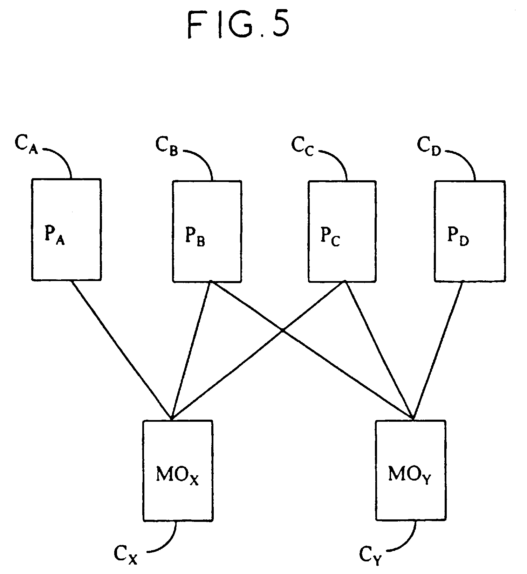

Sur la figure 5, on voit que pour chacun des paquets P_{A}, P_{B}, P_{C} et P_{D}, une structure de données est créée, respectivement C_{A}, C_{B}, C_{C} et C_{D}. Les structures de données C_{X} et C_{Y}, correspondant aux objets gérés MO_{X} et MO_{Y} respectivement, ont un accès aux structures de données qui correspondent aux paquets qu'elles utilisent.

Par exemple, l'objet géré MO_{X} utilise les paquets P_{A}, P_{B} et P_{C}. Aussi, la structure de données C_{X} possède un moyen d'accès aux structures de données C_{A}, C_{B} et C_{C}. De la même façon, l'objet géré MO_{Y} utilisant les paquets P_{B}, P_{C} et P_{D}, la structure de données C_{Y} a un moyen d'accès aux classes C_{B}, C_{C} et C_{D}.

De part ce moyen d'accès, les données communes aux deux objets gérés ne sont traduites, et donc enrichies, qu'une seule fois au niveau des structures de données correspondant au paquet. On obtient ainsi une plus grande modularité du code source obtenue, et le but de l'invention est effectivement atteint.

Comme nous l'avons précédemment annoncé, l'invention peut s'appliquer aux langages orientés objets, dans ce cas les structures de données dont il est question sont des classes au sens de la programmation orientée objet. Elle peut aussi s'appliquer aux langages procéduraux structurés. Dans ce cas, les structures de données sont des structures telles *struct* en langage C, ou *package* en langage ADA.

Les annexes 1, 2 et 3 mettent en exergue un exemple de mise en oeuvre de l'invention dans le cas du langage C++.

L'annexe 1 est un squelette de spécification en GDMO correspondant à l'exemple présenté ci-dessus.

L'annexe 2 est un squelette de code source en C++ tel que pouvant être obtenu par un traducteur selon l'état de la technique.

L'annexe 3 est un squelette de code source en C++ tel que pouvant être obtenu par un traducteur selon une première mise en oeuvre de l'invention.

L'annexe 4 est un squelette de code source en C++ tel que pouvant être obtenu par un traducteur selon une seconde mise en oeuvre de l'invention.

La première mise en oeuvre, qui correspond à l'annexe 3, consiste à traduire le mécanisme d'accès entre classes par la relation d'héritage, qui est un concept classique de la programmation orientée objet.

On voit en lisant ce squelette de code source que les classes correspondant à des objets gérés héritent des classes correspondant à des paquets.

La seconde mise en oeuvre du procédé selon l'invention correspond à l'annexe 4 jointe. Les classes correspondant à des objets gérés contiennent des pointeurs vers les classes correspondant aux paquets, au lieu d'utiliser la relation d'héritage.

Cette mise en oeuvre présente l'avantage de pouvoir gérer facilement le cas des paquets présents de façon conditionnelle. Dans le cas où un paquet est stipulé comme n'étant présent dans un objet géré que de façon conditionnelle, et dans le cas où la condition de présence n'est pas remplie, le pointeur correspondant à ce paquet a une valeur nulle.

Bien que s'appliquant principalement aux langages orientés objets, la présente invention peut s'appliquer également aux langages de programmation non orientés objets, mais disposant de structures de données comme par exemple les structures (*struct*) du langage C.

En reprenant l'exemple présenté à l'annexe 4, il suffit de remplacer chaque mot-clé *class* par le mot-clé *struct*. Par exemple, le squelette de la structure sx remplaçant la classe cx est :

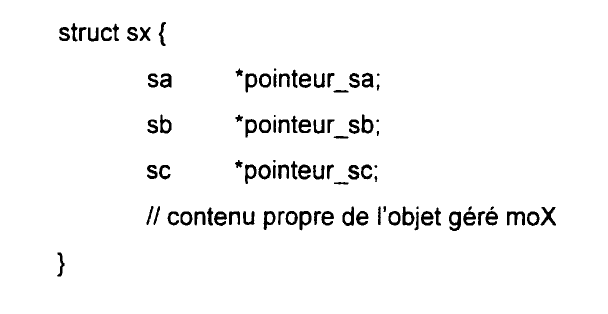

Les identificateurs sa, sb et sc désignent les structures C ayant remplacé les classes ca, cb et cc du code source en C++.

De façon classique, l'élaboration d'applications de gestion des réseaux de télécommunication se fait sur des stations de travail utilisant le système d'exploitation Unix (Unix est une marque déposée de la société AT&T). Ce système met à la disposition de l'utilisateur un ensemble d'outils dont *yacc* qui permet de réaliser simplement des traducteurs en spécifiant l'ensemble des règles de traduction d'un langage possédant une syntaxe donnée vers un autre langage possédant une syntaxe différente.

Par conséquent, la mise en oeuvre du procédé de traduction selon l'invention fait partie du domaine de compétence de l'homme du métier.

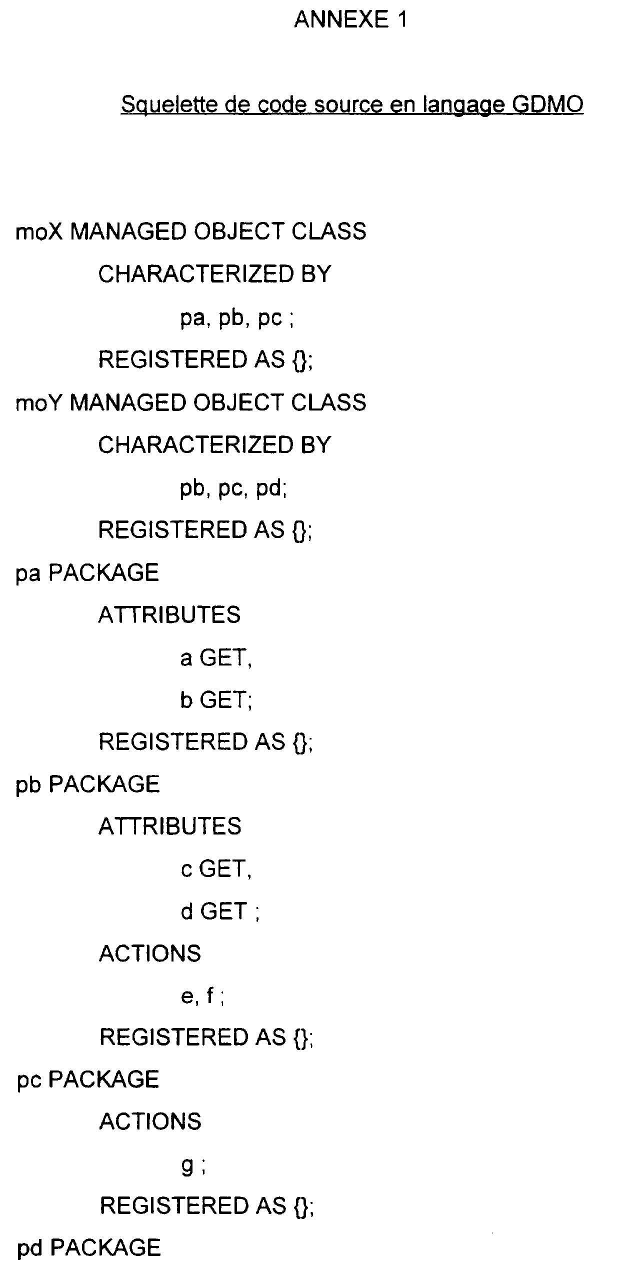

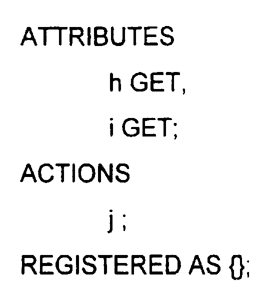

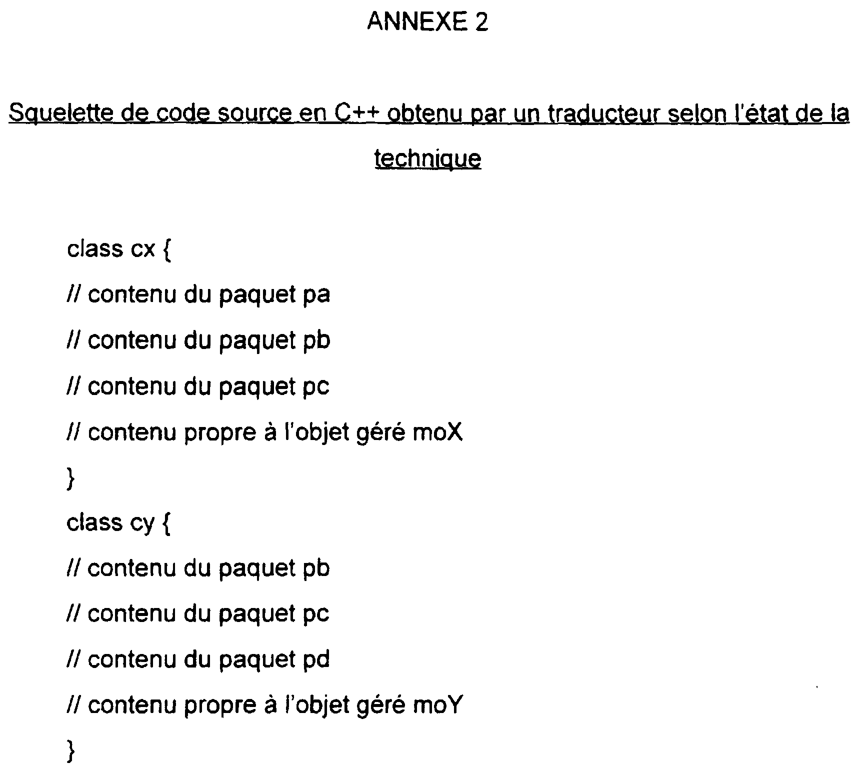

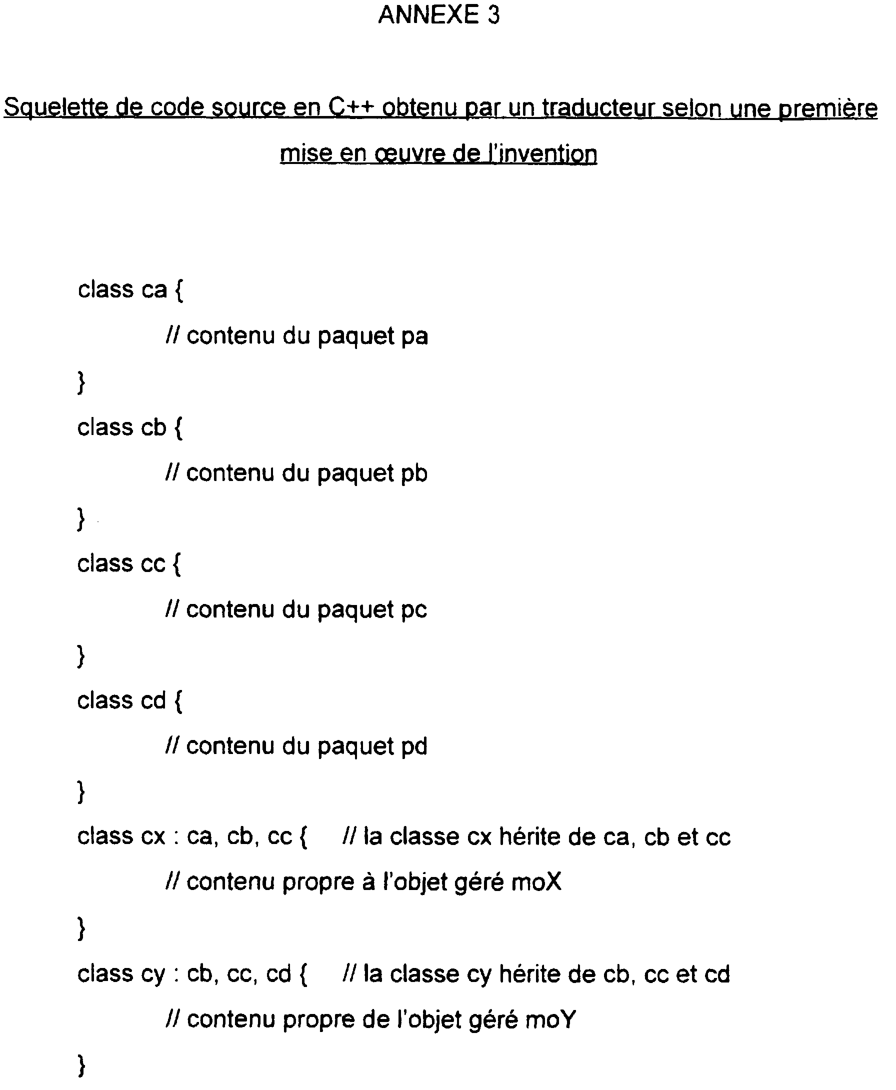

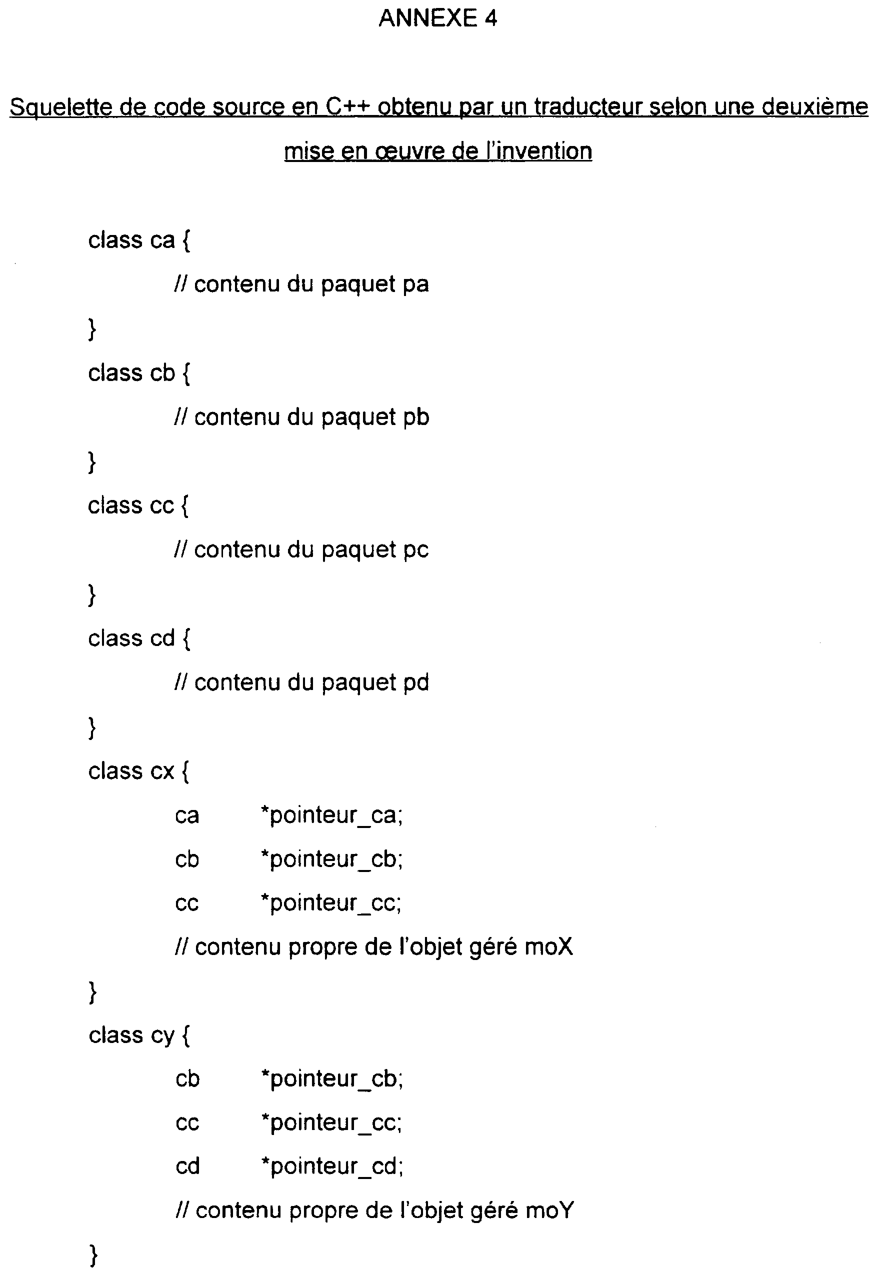

## Revendications

1. Procédé de traduction d'un code source en langage GDMO vers un code source d'un langage de programmation, ledit code source en langage GDMO contenant des objets gérés et lesdits objets gérés contenant des paquets, caractérisé en ce que chaque paquet et chaque objet géré dudit code source en langage GDMO est traduit en une structure de données dans ledit code source en langage de programmation, et en ce que chaque structure de données correspondant à un objet géré dispose d'un moyen d'accès aux structures de données correspondant aux paquets que ledit objet géré contient.

2. Procédé selon la revendication précédente, caractérisé en ce que ledit langage de programmation est un langage orienté objet, et en ce que lesdites structures de données sont des classes au sens de la programmation orientée objet

3. Procédé selon la revendication précédente, caractérisé en ce que ledit moyen d'accès est le mécanisme d'héritage, au sens de la programmation orientée objet.

4. Procédé selon l'une des revendications 1 et 2, caractérisé en ce que ledit moyen d'accès est un pointeur.

5. Procédé selon l'une des revendications précédentes, caractérisé en ce que ledit langage de programmation est le langage C++.
